# EUROPÄISCHE PATENTSCHRIFT

(11) **EP 0 548 506 B1**
(45) Veröffentlichungstag und Bekanntmachung des Hinweises auf die Patenterteilung: **04.02.1998**
(21) Anmeldenummer: 92118600.3
(22) Anmeldetag: 30.10.1992
(51) Int. Cl.: C08G 16/00, C09D 11/10

(54) **Öllösliche, phenolharzmodifizierte Naturharzsäureester, Verfahren zu ihrer Herstellung und ihre Verwendung als selbstgelierende Druckfarbenharze**
Oil soluble, phenolic resins of esterified resin acids, process for their preparation and their application in autogelling printing inks
Résines phénoliques solubles dans l'huile, à base d'esters d'acides résiniques naturels, procédé pour les préparer et leur utilisation dans des encres d'imprimerie autogélifiantes

(30) Priorität: 04.11.1991 DE 4136316
(43) Veröffentlichungstag der Anmeldung: 30.06.1993
(73) Patentinhaber: HOECHST AKTIENGESELLSCHAFT, 65926 Frankfurt am Main (DE)
(72) Erfinder: Bender, Albert, Dr., W-6500 Mainz (DE); Hilker, Walter, W-6204 Taunusstein (DE); Bothe, Lothar, Dr., W-6500 Mainz (DE)

(56) Entgegenhaltungen:
- EP-A- 0 003 378
- EP-A- 0 041 838
- EP-A- 0 065 268
- EP-A- 0 214 526
- EP-A- 0 361 103
- FR-A- 2 161 908
- FR-A- 2 260 602
- FR-A- 2 334 730
- US-A- 4 197 378
- US-A- 4 857 624

## Beschreibung

Die Erfindung betrifft öllösliche, phenolharzmodifizierte Naturharzsäureester, die selbstgelierende Mineralöllösungen bilden und vorteilhaft als Offsetdruckfarbenharze verwendet werden können, sowie Verfahren zu ihrer Herstellung aus Naturharzen, Phenolen, Aldehyden, Veresterungs- und Modifizierungsmitteln.

In der EP-A 0 003 378 wird ein Verfahren zur Herstellung von Umsetzungsprodukten von Naturharzsäuren mit olefinisch ungesättigten Dicarbonsäuren, Resolen und mehrwertigen Alkoholen unter Zusatz von Calciumverbindungen beschrieben. In der US-A 4,857,624 werden Phenolharz-modifizierte Harzester und ihre Verwendung als Druckfarben beschrieben.

Offsetdruckfarben können bekanntlich durch Pigmentieren eines Firnisses hergestellt werden, wobei der Firnis durch Auflösen geeigneter Bindemittelharze in Mineralöl und Zusatz verschiedener Hilfsstoffe gewonnen werden kann. Als Hilfsstoffe kommen zur Verbesserung der Bindemitteleigenschaften, z. B. des Glanzes und der Scheuerfestigkeit des Druckfilms, beispielsweise vegetabilische Öle, Alkydharze, Wachse und gegebenenfalls weitere Additive infrage. Zur Erniedrigung der Zügigkeit, die ein Maß für das Farbübertragungsverhalten der Offsetdruckfarbe darstellt, ist es vorteilhaft, die Firnisse unter Verwendung von Gelbildnern in sogenannte Gelfirnisse zu überführen. Durch die Gelstruktur kann erreicht werden, daß die Rasterpunkte vorteilhaft scharf aufgedruckt werden und beim Wegschlagen des Mineralöls kein Auslaufen und damit kein Verschwimmen des Druckbildes stattfindet, was insbesondere bei hohen Laufgeschwindigkeiten der Druckmaschinen wichtig ist.

Zur Gelbildung werden den Harz lösungen üblicherweise Aluminiumverbindungen zugesetzt. Es ist jedoch bekannt, daß deren Reaktionsverhalten mit den in Mineralöl gelösten Bindemittelharzen nicht leicht zu steuern ist und u. a. sowohl von der Harzart als auch von der Mischungstemperatur abhängt. Es ist auch häufig erforderlich, den gewünschten Gelfirnis in einem gesonderten Verfahrensschritt herzustellen. Dazu wird das Bindemittelharz bei erhöhter Temperatur in der zu verwendenden Mineralölkomponente, üblicherweise bei 160 bis 180 °C, gelöst, der Gelbildner zugesetzt und die Lösung anschließend auf Raumtemperatur abgekühlt. Bei sehr reaktiven Gelbildnern, wie z. B. Aluminiumalkoholaten, ist jedoch bei deren Einmischen zur Erzielung einer kontrollierten Gelbildung zunächst eine niedrigere Temperatur als die zuvor eingehaltene Lösetemperatur des Harzes in Mineralöl erforderlich. Auch weniger reaktive Aluminiumverbindungen, wie z. B. Aluminiumchelate, beispielsweise mit Acetessigester modifizierte Aluminiumalkoholate, werden vorteilhaft bei einer niederen Temperatur zugegeben, um unerwünschte und vorzeitige Reaktionen mit dem gelösten Harz, die zu Verklumpungen führen können, zu vermeiden. Zur gewünschten Gelbildung muß dann nach erfolgter Auflösung des Gelbildners die Temperatur der Harzlösung wieder auf 180 °C erhöht und danach wieder auf Raumtemperatur abgekühlt werden. Zu hohe Temperaturen (> 180 °C) sind im allgemeinen von Nachteil und können zur Gelzerstörung führen. Energetisch ist dieses Aufheiz- und Abkühlverfahren ungünstig und es bedarf einer exakten Temperaturführung bei der Umsetzung der Aluminiumverbindungen mit dem Harz, damit die Zügigkeit des resultierenden Gels nicht in unerwünschter Weise verändert wird. Bindemittelharze mit unzureichender Mineralölverträglichkeit können auch nach der Gelbildung mit dem verwendeten Mineralöl wenig verträglich bleiben oder sogar noch unverträglicher werden. Um zu vermeiden, daß sie dann aus der Lösung ausfallen, können Löslichkeitsvermittler, wie z. B. vegetabilische Öle oder Alkydharze oder langkettige, hochsiedende Alkohole mitverwendet werden. Zusätze dieser Art können andererseits bekanntlich aber zu nachteiligen Trockungsverzögerungen im Druckfilm führen.

Die Herstellung von Offsetdruckfarben könnte wesentlich vereinfacht werden, wenn es gelänge, selbstgelierende Kunstharze zu verwenden, die eine gute Mineralölverträglichkeit besitzen und durch einfaches Auflösen in Mineralöl oder vegetabilischen Ölen oder Gemischen solcher öle ohne zusätzliche Umsetzung mit Aluminiumverbindungen den gewünschten stabilen Gelfirnis zu bilden vermögen. Es sind jedoch bisher keine diesbezüglichen Möglichkeiten bekannt geworden und es wurde in Fachkreisen auch bereits vermutet, daß solche Möglichkeiten überhaupt nicht realisierbar zu sein scheinen, da alle bisherigen Bemühungen zu teilweise oder vollständig irreversiblen Vernetzungen der Harze, nicht aber zu reversiblen Gelbildungen führten.

Der vorliegenden Erfindung lag somit die Aufgabe zugrunde, Kunstharze verfügbar zu machen, die in Mineralöl oder vegetabilen Ölen einen stabilen Gelfirnis bilden , ohne die vorstehend genannten Nachteile aufzuweisen. Diese Aufgabe wird durch das Verfahren gemäß Anspruch 1 gelöst.

Es wurde nun überraschenderweise gefunden, daß man Kunstharze, die in Mineralöllösungen selbstgelierende Eigenschaften besitzen und als Bindemittelharze zur Herstellung von Offsetdruckfarben vorteilhaft verwendbar sind dadurch erhalten kann, daß man bei der Herstellung von Offsetdruckfarbenharzen auf der Basis von phenolharzmodifizierten Naturharzsäureestern als Katalysator für die Resolbildung aus Phenolen und Aldehyden in der Naturharzschmelze sowie für die Naturharzsäureveresterung Magnesiumverbindungen verwendet und das bei der Kondensationsreaktion und der Naturharzsäureveresterung entstehende Wasser durch azeotrope Destillation unter Mitverwendung eines zur Azeotropbildung mit Wasser befähigten inerten organischen Lösungsmittels entfernt. Die hierbei resultierenden Kunstharze zeigen gute Mineralöllöslichkeiten und ihre Lösungen in Mineralöl sind überraschenderweise ohne zusätzliche Gelbildner reversibel selbstgelierend und bilden keine irreversiblen Vernetzungen.

Die Herstellung von in Mineralöllösungen nicht selbstgelierenden phenolharzmodifizierten Naturharzsäureestern und deren Verwendung mit Gelbildnern in Druckfarben für den Offstdruck sind bekannt und können nach bekannten Methoden erfolgen. Sie können durch Umsetzung von Phenolen mit Aldehyden in Naturharzschmelzen unter Mitverwendung von Veresterungsmitteln und Katalysatoren erhalten sowie durch Umsetzung mit α,β-ethylenisch ungesättigten Carbonsäuren, Fettsäuren oder ethylenisch ungesättigten Kohlenwasserstoffharzen modifiziert werden.

Zur Herstellung von bekannten und in Mineralöl lösungen nicht selbstgelierenden phenolharzmodifizierten Naturharzsäureestern nach bekannten Methoden kommen als Ausgangskomponenten bevorzugt folgende Substanzgruppen A) bis G) infrage:
**A)** Naturharze oder Naturharzsäuren, vorzugsweise Kolophonium, Wurzelharz, Tallharz sowie disproportioniertes oder partiell hydriertes oder dimerisiertes Naturharz beliebiger Provenienz. Häufig werden vorteilhaft Mischungen aus Naturharzen bzw. Naturharzsäuren und α,β-ethylenisch ungesättigten Carbonsäuren oder deren Anhydriden, insbesondere Fumarsäure, Maleinsäure, Maleinsäureanhydrid, Itakonsäure, Zimtsäure, Acrylsäure, Methacrylsäure, oder deren Umsetzungsprodukte, verwendet,
**B)** Einkernige oder mehrkernige Phenole, vorzugsweise solche, die gegenüber Oxoverbindungen mehrfachfunktionell sind, insbesondere Phenol, (C₁-C₁₂)-Alkylphenole, Aryloder Aralkylphenole, Kresole, 1,3,5-Xylenole, Isopropyl-, p-tert.-Butyl-, Amyl-, Oktyl-, Nonylphenol, Diphenylolpropan, Phenylphenol, Cumylphenol sowie Additionsprodukte aus Phenolen und ethylenisch ungesättigten Monomeren, vorzugsweise Styrol, α-Methylstyrol, α-Chlor-styrol, Vinyltoluol, Cyclopentadien,
**C)** Aldehyde oder Aldehydacetale, vorzugsweise aliphatische (C₁-C₇)-Aldehyde, insbesondere Formaldehyd in seinen verschiedenen monomeren, oligomeren und polymeren Formen, Acetaldehyd, Butyraldehyd, Isobutyraldehyd, ferner Benzaldehyd, Furfurol, Glyoxal, sowie gegebenenfalls aus Komponenten der Substanzgruppen B) und C) hergestellte Phenolresole,
**D)** Polyhydroxygruppen enthaltende Veresterungsmittel zur Veresterung der Umsetzungsprodukte aus Phenolharzen und Naturharzen bzw. Naturharzsäuren, vorzugsweise polyfunktionelle Alkohole, insbesondere bifunktionelle , z.B. Glykole, oder trifunktionelle, z.B. Trimethyloläthan, Trimethylolpropan, Glycerin, oder tetrafunktionelle, z.B. Pentaerythrit, oder pentafunktionelle, z.B. dimerisiertes Trimethylolpropan, oder hexafunktionelle Alkohole, z.B. dimerisierter Pentaerythrit,
**E)** Kondensationskatalysatoren, u.a. für die Resolbildung aus Phenolen und Aldehyden oder Aldehydacetalen sowie für die Veresterungsreaktionen, vorzugsweise Oxide, Hydroxide, Carbonate, Acetate von Magnesium.
**F)** Fettsäuren zur Harzmodifizierung, vorzugsweise tierische, pflanzliche oder durch Raffination gewonnene Fettsäuren, ferner Fettsäureverbindungen, z.B. Fette und Fettsäureglycerinester, insbesondere in Form von vegetabilischen oder tierischen Ölen, z.B. Tallöl, Baumwollsaatöl, Sojaöl, Safloröl, Rizinusöl, Leinöl, Holzöl, Fischöl,
**G)** Ethylenisch ungesättigte Kohlenwasserstoffharze zur Harzmodifizierung, vorzugsweise Polymere oder Oligomere aus einfach und/oder mehrfach ethylenisch ungesättigten (C₅-C₉)-Kohlenwasserstoffen, insbesondere aus der Gruppe Isopren, Cyclopentadien, Inden, Cumaron, Styrol.

Die Umsetzung der Komponenten A) bis E) und gegebenenfalls F) und G) kann in bekannter Weise durch Erhitzen von Komponentengemischen in den gewünschten Mengenverhältnissen sowohl im Eintopfverfahren als auch durch aufeinanderfolgendes Zudosieren einzelner Komponenten in eine auf Reaktionstemperatur gebrachte Komponentenvorlage aus Naturharz oder Naturharzsäuren und stufenweises Erwärmen von ca. 80 °C bis auf Temperaturen von 300 °C unter direktem Abdestillieren des entstehenden Reaktionswassers und Erreichen niedriger Säurezahlen in dem resultierenden Harz erfolgen. Alle bisher bekannt gewordenen und nach bekannten Verfahren hergestellten öllöslichen phenolharzmodifizierten Naturharzsäureester können keine selbstgelierenden Mineralöllösungen bilden und ihre Lösungen in Mineralöl gelieren gegebenenfalls nur nach dem Zusatz von spezifischen Geliermitteln bzw. Gelbildnern, wozu üblicherweise Aluminiumverbindungen verwendet und diese in der Mineralöl lösung des Harzes unter Erwärmung auf ca. 180 °C gelöst werden und die Lösung danach wieder auf Raumtemperatur abgekühlt wird. Beim Abkühlen auf Raumtemperatur geliert die Lösung, wobei das entstandene Gel im allgemeinen nicht reversibel durch Temperaturerhöhung gelöst und beim Abkühlen in gleicher Qualität wieder als Gel erhalten werden kann. Es treten dabei statt dessen häufig irreversible Vernetzungen auf, die zu Trübungen der Mineralöllösung durch unlösliche Bestandteile aus dem Harz und dem Gelbildner und zur Verringerung der Gelviskosität führen. Die Empfindlichkeit der Gelviskositäten gegenüber Temperaturschwankungen ist ebenfalls erheblich und kann häufig zu Störungen und Verlusten bei der Verwendung der Gele als Bindemittel in Offsetdruckfarben führen.

Gegenstand der Erfindung sind daher öllösliche, phenolharzmodifizierte Naturharzsäureester, die selbstgelierende Mineralöllösungen bilden und erhalten werden aus Komponenten der Substanzgruppen
A) Naturharze oder Naturharzsäuren und gegebenenfalls deren Mischungen oder Umsetzungsprodukte mit α,β-ethylenisch ungesättigten Carbonsäuren oder deren Anhydriden,
B) Einkernige oder mehrkernige alkylolisierbare Phenole, vorzugsweise gegenüber Oxoverbindungen mehrfachfunktionelle Phenole,
C) Aldehyde oder Aldehydacetale, vorzugsweise aliphatische (C₁-C₇)-Aldehyde, wobei die Komponenten B) und C) gegebenenfalls auch als separat hergestellte Kondensationsprodukte in einer Phenolresolform eingesetzt oder mitverwendet werden,
D) Polyfunktionelle aliphatische, cycloaliphatische oder aromatischaliphatische Alkohole,
E) Magnesiumverbindungen als Kondensationskatalysatoren,
F) gegebenenfalls Fettsäuren oder Fettsäureverbindungen und
G) gegebenenfalls ethylenisch ungesättigte Kohlenwasserstoffharze,
durch Umsetzung der Komponenten in Lösung oder vorzugsweise in Substanz bei Temperaturen im Bereich von 80 bis 300 °C, vorzugsweise 90 bis 280 °C, insbesondere 140 bis 260 °C, wobei entweder die gesamte Mischung aus allen eingesetzten Komponenten zur Reaktion gebracht oder einzelne Komponenten vorgelegt und die übrigen durch Zudosieren zur Umsetzung gebracht werden, dadurch gekennzeichnet, daß man, vorzugsweise unter einer inerten Schutzgasatmosphäre,
1) Naturharze oder Naturharzsäuren aus der Substanzgruppe A) bei einer Temperatur zwischen 90 und 250 °C, vorzugsweise 140 bis 200 °C, mit α,β-ethylenisch ungesättigten Carbonsäuren oder deren Anhydriden aus der Substanzgruppe A) umsetzt, das Umsetzungsprodukt
2) mit einer Magnesiumverbindung aus der Substanzgruppe E) vermischt und der schmelzflüssigen Mischung bei einer Temperatur zwischen 100 und 250 °C, vorzugsweise 110 bis 160 °C, die phenolische Komponente aus der Substanzgruppe B) zusetzt, dann die Aldehydkomponente aus der Substanzgruppe C) bei einer Temperatur von 100 bis 250°C einträgt und unter Resolbildung umsetzt, vorzugsweise unter einem Druck zwischen 1 und 10 bar, insbesondere 1 bis 5 bar, anschließend dem Umsetzungsprodukt
3) die Polyolkomponente aus der Substanzgruppe D) bei einer Temperatur zwischen 190 und 280 °C, vorzugsweise 230 bis 260 °C, und gegebenenfalls bei einer oder mehreren der Stufen 3), 2) oder 1) die Fettsäurekomponente aus der Substanzgruppe F) sowie gegebenenfalls die Kohlenwasserstoffharzkomponente aus der Substanzgruppe G) beimischt, dem Reaktionsgemisch
4) ein als Schleppmittel zur azeotropen Destillation von Wasser bei der Umsetzungstemperatur befähigtes inertes organisches Lösungsmittel zusetzt, bei Temperaturen zwischen 200 und 280 °C, vorzugsweise 220 bis 270 °C, insbesondere 240 bis 260 °C, das entstehende Reaktionswasser kontinuierlich azeotrop destilliert und über einen Wasserabscheider aus dem Reaktionsgemisch entfernt, wobei man das Schleppmittel gegebenenfalls vorzugsweise im Kreislauf führt, und die azeotrope Destillation solange fortsetzt, bis die Bildung von Reaktionswasser beendet ist und das entstandene Harz eine Säurezahl von unterhalb 50 mg KOH/g Harz, vorzugsweise von unterhalb 30 mg KOH/g Harz, aufweist, anschließend das Schleppmittel durch Destillation zunächst bei Normaldruck und am Ende unter Vakuum bei Drücken zwischen 1000 und 0,1 mbar, vorzugsweise 200 bis 50 mbar, und Temperaturen bis zu 300 °C, vorzugsweise bis zu 280 °C, entfernt und
5) gegebenenfalls in der vom Schleppmittel befreiten Harzschmelze vor deren Abkühlung eine kleinere Menge eines hochsiedenden Mineralöls löst, die Lösung auf Raumtemperatur abkühlt und das Harz in fester, mineralölhaltiger Gelform gewinnt.

Weiterer Gegenstand der Erfindung ist ein Verfahren zur Herstellung der vorstehend beschriebenen öllöslichen, phenolharzmodifizierten Naturharzsäureester, die selbstgelierende Mineralöllösungen bilden können, aus Naturharzen, Phenolen, Aldehyden, Katalysator, Veresterungsmitteln und Modifizierungsmitteln, dadurch gekennzeichnet, daß man die Umsetzung der Reaktanten wie vorstehend beschrieben durchführt und das Verfahrensprodukt isoliert.

Bei der erfindungsgemäßen Herstellung von in Mineralöllösungen selbstgelierenden Bindemittelharzen auf der Basis von phenolharzmodifizierten Naturharzsäureestern ist es von grundsätzlicher Wichtigkeit, daß in der Verfahrensstufe 2) eine Magnesiumverbindung als Kondensationskatalysator verwendet und in der Verfahrensstufe 4) ein bei der Reaktionstemperatur zur azeotropen Destillation von Wasser befähigtes inertes organisches Lösungsmittel als Schleppmittel zur azeotropen Destillation des Reaktionswassers verwendet und das Reaktionswasser durch kontinuierliche azeotrope Destillation aus dem Reaktionsgemisch ausgekreist und eliminiert wird. Nur die Kombination beider Maßnahmen führt überraschenderweise zu einem in Mineralöllösungen selbstgelierenden Bindemittelharz, wogegen bei der Einzelanwendung von jeweils nur einer dieser Maßnahmen kein selbstgelierendes Endprodukt resultiert. Bei der kombinierten erfindungsgemäßen Anwendung beider Maßnahmen wird hingegen offensichtlich ein synergistischer Effekt erzielt, der weder bekannt noch vorhersehbar und in hohem Maße überraschend und unerwartet war.

Bei der erfindungsgemäßen Umsetzung der Komponenten A) bis G) unter Mitverwendung eines azeotropbildenden Schleppmittels gemäß den vorgenannten Verfahrensstufen 1) bis 5) beträgt der Anteil der einzelnen Komponenten, bezogen auf die Gesamtmenge (= 100 Gew.-%) aller Komponenten, vorzugsweise
1) 20 bis 80 Gew.-%, vorzugsweise 30 bis 75 Gew.-%, insbesondere 35 bis 60 Gew.-%, Naturharze oder Naturharzsäuren aus der Substanzgruppe A) und 0,1 bis 5 Gew.-%, vorzugsweise 2 bis 4 Gew.-%, α,β-ethylenisch ungesättigte Carbonsäuren oder deren Anhydride aus der Substanzgruppe A),
2) 0,01 bis 2 Gew.-%, vorzugsweise 0,3 bis 1 Gew.-%, insbesondere 0,4 bis 0,8 Gew.-%, berechnet als MgO, Magnesiumverbindungen aus der Substanzgruppe E), 10 bis 45 Gew.-%, vorzugsweise 15 bis 40 Gew.-%, insbesondere 20 bis 35 Gew.-%, phenolische Komponenten aus der Substanzgruppe B) und
   2 bis 20 Gew.-%, vorzugsweise 3 bis 10 Gew.-%, insbesondere 5 bis 8 Gew.-%, Aldehydkomponenten aus der Substanzgruppe C), oder gegebenenfalls anstelle der Komponenten aus den Substanzgruppen B) und C) oder anteilig mit diesen bis zu 45 Gew.-% von aus Verbindungen der Substanzgruppen B), C) und E) separat hergestellten Kondensationsprodukten in einer Phenolresolform,
3) 1 bis 20 Gew.-%, vorzugsweise 3 bis 15 Gew.-%, insbesondere 5 bis 10 Gew.-%, Polyolkomponenten aus der Substanzgruppe D),
   0 bis 30 Gew.-%, vorzugsweise 3 bis 15 Gew.-%, insbesondere 5 bis 10 Gew.-%, Fettsäurekomponenten aus der Substanzgruppe F),
   0 bis 30 Gew.-%, vorzugsweise 1 bis 25 Gew.-%, insbesondere 2 bis 10 Gew.-%, Kohlenwasserstoffharzkomponenten aus der Substanzgruppe G),
4) 1 bis 20 Gew.-%, vorzugsweise 3 bis 15 Gew.-%, insbesondere 4 bis 10 Gew.-%, inertes Schleppmittel, und
5) 0 bis 15 Gew.-%, vorzugsweise 3 bis 10 Gew.-%, insbesondere 5 bis 8 Gew.-%, hochsiedendes Mineralöl.

Als Verbindungen der Substanzgruppen A) bis G) kommen vorzugsweise infrage:
Zu A) Naturharze oder Naturharzsäuren, insbesondere z. B. Kolophonium (Baumharz), Wurzelharz, Tallharz, Naturharze, die teilweise hydriert, disproportioniert oder dimerisiert sind. Die Harze bzw. Harzsäuren zeigen gegebenenfalls eine Bromzahl (= aufgenommene Menge Brom in g pro 100 g Harz) im Bereich von vorzugsweise 200 bis 280 und eine Säurezahl im Bereich von vorzugsweise 100 bis 300 mg KOH/g Harz;
   α,β-ethylenisch ungesättigte Carbonsäuren oder Carbonsäureanhydride, vorzugsweise aliphatische Carbonsäuren mit 3 bis 22 C-Atomen, insbesondere z. B. Fumarsäure, Maleinsäure, Maleinsäureanhydrid, Itaconsäure, Zimtsäure, Acrylsäure. Besonders bevorzugt ist Maleinsäureanhydrid;
Zu B) Es können die vorstehend beim Stand der Technik beschriebenen Phenole verwendet werden. Bevorzugt sind mono- und difunktionelle, insbesondere difunktionelle, Phenole d. h. solche, bei denen eine oder zwei der orthooder para-Stellungen zur phenolischen OH-Gruppe am Benzolring reaktiv und zur Aldehydaddition befähigt sind. Auch trifunktionelle Phenole, wie z. B. Phenol oder tetrafunktionelle, wie z. B. Diphenylolpropan, sind in untergeordneten Anteilen zusammen mit mono- und/oder difunktionellen Phenolen verwendbar, wobei der Anteil an tri- oder tetrafunktionellen Phenolen vorzugsweise nicht mehr als 20 Gew.-%, bezogen auf die Gesamtmenge der eingesetzten Phenole, betragen soll. Mit den besonders bevorzugten difunktionellen Phenolen, wie z. B. den Alkyl- und Aralkylphenolen, lassen sich sehr vorteilhaft die gewünschten Verträglichkeiten der erfindungsgemäßen Harze mit aliphatischen Kohlenwasserstoffen und mit Mineralölen erzielen. In gleicher Weise vorteilhaft wirken ferner die bekannten Umsetzungsprodukte aus trifunktionellen Phenolen mit ethylenisch ungesättigten Monomeren, so daß auch diese Umsetzungsprodukte bevorzugte Phenolkomponenten darstellen. Besonders bevorzugte difunktionelle Phenole sind tert.-Butyl-, Oktyl- und Nonylphenol;
Zu C) Alle aus der üblichen Phenolresol- bzw. Phenolresolharzherstellung bekannten Aldehyde und Aldehydacetale sind verwendbar. Besonders bevorzugt ist Formaldehyd, vorzugsweise in Form seiner wäßrigen Lösungen oder in einer oligomeren Form oder in fester polymerer Form, z. B. als Paraformaldehyd;
   Das Molverhältnis der Phenolkomponente aus B) zur Aldehydkomponente kann für die Phenolresolbildung in weiten Grenzen variiert werden und liegt vorzugsweise im Bereich von 1 : 0,9 bis 1 : 3,5, insbesondere 1 : 1 bis 1 : 2,5;
   Überschüssiger bzw. nicht umgesetzter Aldehyd wird aus dem Reaktionsgemisch, vorzugsweise destillativ, entfernt. Durch die Natur und die Menge der verwendeten Ausgangskomponenten für die Phenolresolharzbildung läßt sich das Gelierverhalten der als Endprodukte erhältlichen erfindungsgemäß hergestellten und in Mineralöl lösungen selbstgelierenden phenolharzmodifizierten Naturharzsäureester auf bequeme Art beeinflussen bzw. steuern, wobei der Anteil an Phenolresolharzkomponenten in dem selbstgelierenden Endprodukt vorzugsweise bis zu 45 Gew.-%, bezogen auf das Endprodukt, betragen kann. Die Phenolresolharzbildung kann auch separat nach bekannten Methoden aus Phenolen und Aldehyden und basischen Katalysatoren, die vorzugsweise Mg-Verbindungen enthalten, bei Temperaturen zwischen 50 und 160 °C, vorzugsweise 60 bis 100 °C, bei Normaldruck oder erhöhtem Druck im Autoklaven durchgeführt und das Produkt dann der erfindungsgemäßen Naturharz- bzw. Naturharzsäureschmelze anstelle entsprechender Mengen Phenolkomponenten aus der Substanzgruppe B) und Aldehydkomponenten aus der Substanzgruppe C) zugesetzt werden. Bevorzugt ist jedoch die Phenolresolharzbildung aus Phenolkomponenten und Aldehydkomponenten in situ in der Naturharz- bzw. Naturharzsäureschmelze;
Zu D) Es sind alle aus der Polyesterharzherstellung bekannten und Polyhydroxygruppen enthaltenden Verbindungen als Veresterungsmittel verwendbar, vorzugsweise polyfunktionelle Alkohole. Besonders bevorzugt sind Glycerin, Trimethylolpropan und Pentaerythrit. Ganz besonders bevorzugt sind Pentaerythrit und dimerisierter Pentaerythrit;
Zu E) Als Kondensationskatalysatoren sind zwingend Magnesiumverbindungen erforderlich. Bevorzugt sind Magnesiumoxide, Mg-hydroxide oder Magnesiumsalze von schwachen organischen Säuren, insbesondere Mg-carbonate, Mg-bicarbonate, Mg-acetate, Mg-formiate, Mg-oxalate.
   In untergeordneten Anteilen von bis zu maximal 1/3-Äquivalent, bezogen auf die Äquivalenzzahl der eingesetzten Magnesiumverbindung, können auch Zinkverbindungen oder Calciumverbindungen mitverwendet werden. Bei alleiniger Verwendung der letzteren Verbindungen ohne Magnesiumverbindungen besitzen die bei der Harzsynthese resultierenden Endprodukte in Mineralöllösungen keine selbstgelierenden Eigenschaften, was außerordentlich überraschend ist;
Zu F) Als Fettsäuren werden vorzugsweise tierische, pflanzliche oder durch Raffination gewonnene Fettsäuren oder Fettsäureverbindungen verwendet. Die Jodzahl (= aufgenommene Menge Jod in g pro 100 g Fett) dieser Verbindungen kann vorzugsweise im Bereich von 50 bis 150 liegen, so daß vorzugsweise halbtrocknende und trocknende Öle und Fette infrage kommen. Auch nichttrocknende, d. h. gesättigte Öle und Fette können anteilig zur Harzmodifizierung mitverwendet werden, was sich auf die Jodzahl von Fettsäuremischungen erniedrigend auswirkt.
   Der Anteil der an der erfindungsgemäßen Harzsynthesereaktion gegebenenfalls teilnehmenden Fettsäurekomponenten, bezogen auf die bei der Harzsynthese resultierenden erfindungsgemäßen selbstgelierenden Endprodukte, kann vorzugweise bis zu 30 Gew.-% betragen. Bevorzugte Fettsäurekomponenten sind z. B. hydriertes Kokosfett, Kokosfett, Palmöl, Sheabutter, Japanwachs, Erdnußöl, Olivenöl, Sulfuröl, Rizinusöl, Reisöl, Baumwollsaatöl, Maisöl, Rüböl, Sojabohnenöl, Leinöl, Sonnenblumenöl, Holzöl, Talg, Walrat, Tran, Wollfett, Raffinationsfettsäuren, Tallöl, dehydratisiertes Rizinusöl, polymerisierte Öle, wie z. B. die sog. Leinölstandöle, oder Gemische aus diesen Komponenten;
Zu G) Als ethylenisch ungesättigte Kohlenwasserstoffharze eignen sich vorzugsweise solche, deren Makromoleküle Cyclopentadien-, Dicyclopentadien-, Cumaron-, Indensowie Styrol-Einheiten enthalten. Ihre erfindungsgemäße Mitverwendung bei der Harzsynthese dient gegebenenfalls der Beeinflussung der erfindungsgemäß in Mineralöllösungen selbstgelierenden Endprodukte hinsichtlich einer geringeren Wasseraufnahme des Endproduktes, wobei die Kohlenwasserstoffharze gegebenenfalls in Mengen von vorzugsweise bis zu 30 Gew.-%, bezogen auf das selbstgelierende Endprodukt, mitverwendet werden.

Als inerte Schleppmittel, die bei der Herstellung erfindungsgemäßer Harze vorzugsweise in der Stufe 4) des erfindungsgemäßen Syntheseverfahrens zugesetzt werden und mit Wasser unter den Umsetzungsbedingungen Azeotrope bilden können, kommen vorzugsweise gesättigte aliphatische oder aromatische Kohlenwasserstoffe infrage, deren Siedetemperaturen unter Normaldruck vorzugsweise oberhalb von 100 °C liegen, z. B. Alkane, insbesondere Hexan, Dekan, Gemische von aliphatischen Kohlenwasserstoffen, wie sie z. B. in Benzin vorliegen oder in entsprechenden Mineralölfraktionen, ferner vorzugsweise Toluol oder Xylol. Das Schleppmittel wird vorzugsweise über ein Einleitungsrohr am Boden des Reaktionsgefäßes dem Reaktionsgemisch zugesetzt. Geringe Mengen Schleppmittel können bereits auch in der Stufe 1) des erfindungsgemäßen Syntheseverfahrens zugesetzt werden, um die Schmelzviskosität der Ausgangskomponenten zu erniedrigen. Vorzugsweise wird die gesamte Schleppmittelmenge spätestens beim Erreichen einer Reaktionstemperatur von 200 °C zugesetzt.

Es ist erfindungsgemäß besonders wichtig, daß mittels dieser Schleppmittel das bei der erfindungsgemäßen Kondensationsreaktion entstehende Reaktionswasser kontinuierlich und vollständig durch azeotrope Destillation aus dem Reaktionsgemisch entfernt wird, wobei das Schleppmittel vorzugsweise im Kreislauf geführt wird, und daß nach Beendigung der Wassereliminierung das Schleppmittel wieder aus dem Reaktionsgemisch destilliert und entfernt wird. Falls diese Bedingung der fortlaufenden und ausschließlich azeotropen Auskreisung des Reaktionswassers nicht konsequent erfüllt wird, kann die Selbstgelierungseigenschaft des Endproduktes teilweise oder vollständig verlorengehen und gegebenenfalls ein nicht mehr erfindungsgemäßes Endprodukt resultieren.

Bei dem erfindungsgemäßen Syntheseverfahren mit den vorstehend beschriebenen Verfahrensstufen 1) bis 5) wird der Fortgang der Kondensationsreaktion anhand der Säurezahl des Reaktionsgemisches verfolgt. So kann die Säurezahl des Harzgemisches anfangs vorzugsweise bis zu 300 mg KOH/g Harz betragen, ermittelt nach üblichen Methoden. Sie fällt mit fortschreitender Umsetzung unter Wasserabspaltung und azeotroper Wasserauskreisung fortlaufend ab und die Veresterungsreaktion wird solange fortgesetzt, bis die erfindungsgemäße Umsetzung das gewünschte Endstadium erreicht hat und die Säurezahl auf Werte von < 50, vorzugsweise < 30 mg KOH/g Harz abgesunken ist. Danach wird das Schleppmittel durch Destillation, zuletzt unter Vakuum, aus dem Reaktionsprodukt entfernt. In manchen Fällen kann es auch vorteilhaft sein, das Schleppmittel oder Anteile davon in dem Endprodukt zu belassen, falls es sich problemlos in dem Endprodukt löst und dessen weitere Verwendung nicht stört oder beeinträchtigt. Dies kann vorzugsweise bei sehr hochmolekularen Harzen mit hohem Schmelzpunkt der Fall sein,-deren Verarbeitbarkeit durch eine solche Maßnahme erheblich verbessert werden kann, indem ihre Schmelzviskosität und der Schmelzpunkt erniedrigt und eine raschere Löslichkeit in Mineralöl ermöglicht wird.

Die Gelstruktur der in Mineralöllösungen selbstgelierenden erfindungsgemäßen Harze kann durch rheologische Messungen an den jeweiligen Gelen bei Raumtemperatur oder bei erhöhten Temperaturen charakterisiert werden. Als Charakterisierungsmethode ist hierbei vorzugsweise die Bestimmung der Viskoelastizität des Gels geeignet, deren Messung unter Verwendung eines oszillierenden Rotationsviskosimeters (Hersteller: Fa. Haake) erfolgt, wobei der elastische Anteil (= Speichermodul G') und der viskose Anteil (= Verlustmodul G'') ermittelt werden. Die Messung der Werte G' und G'' erfolgt in Abhängigkeit von der Winkelgeschwindigkeit ω, angegeben in [s⁻¹], des oszillierenden Rotationsviskosimeters.

Harze ohne Gelstruktur verhalten sich weitgehend viskos und zeigen hohe G''-Werte, während G', vergleichsweise zu G'', relativ niedrige Werte ergibt. Mit steigendem Gelcharakter des Harzes wächst der elastische Anteil und damit der Wert von G', während der Wert von G'' kleiner wird.
In der Literatur wird der Quotient G"/G' häufig als Tangens delta (tan δ) bezeichnet und als ein Maß für die Viskoelastizität verwendet. Niedere tan δ-Werte bedeuten dabei hohe Elastizitäten bzw. hohe Gelanteile und hohe tan δ-Werte stehen für niedere Elastizitäten bzw. geringe Gelanteile. Harze mit hoher Selbstgelierfähigkeit zeigen somit niedere tan δ-Werte und Harze mit geringer Selbstgelierfähigkeit zeigen höhere tan δ-Werte. Der tan δ-Wert stellt somit ein überprüfbares Maß für ein charakteristisches Eigenschaftsmerkmal von gelierfähigen Substanzen, nämlich deren Gelierfähigkeit, dar und kann im vorliegenden Fall vorteilhaft als Parameter zur Charakterisierung erfindungsgemäßer Harze herangezogen werden.

Zur Messung der Viskoelastizität werden die erfindungsgemäßen und in Mineralöllösungen selbstgelierenden phenolharzmodifizierten Naturharzsäureester zunächst in Gele übergeführt, indem man sie während 30 Minuten bei 180 °C im Gew.-Verhältnis Harz : Mineralöl = 1 : 1,5 mit einem standardisierten Mineralöl als Prüföl vermischt, wobei das Prüföl einen Siedebereich von 240 bis 270 °C besitzt und einen Anilinpunkt von 72 °C zeigt (Standardmineralöl PKW F 4/7, Lieferant: Fa. Haltermann), die Mischungen auf Raumtemperatur abkühlt, wobei aus der 40 gew.-%igen Harzlösung in Mineralöl ein Gel entsteht, und den tan δ-Wert des Gels in einem oszillierenden Rotationsviskosimeter (Gerät RV 20/CV 100 der Fa. Haake mit der Meßeinrichtung (Kegel) PK 20 bei 23 °C, einem Auslenkwinkel von 10° und einem Frequenzsweep von 0,05 bis 5 Hz) ermittelt.

Weiterer Gegenstand der Erfindung sind daher öllösliche phenolharzmodifizierte Naturharzsäureester, die selbstgelierende Mineralöllösungen bilden können und nach dem vorstehend beschriebenen erfindungsgemäßen Verfahren erhalten wurden, dadurch gekennzeichnet, daß ihre 40 gew.-%igen Lösungen in standardisiertem Mineralöl (Siedebereich 240 bis 270 °C, Anilinpunkt 72 °C) viskoelastische Gele bilden, die bei Messungen im oszillierenden Rotationsviskosimeter bei 23 °C im Winkelgeschwindigkeitsbereich ω = 1 bis 10 s⁻¹ tan δ-Werte von vorzugsweise < 5, insbesondere < 2, ergeben.

Zur Ermittlung der Mineralölverträglichkeit bzw. der Klarlöslichkeit in Mineralöl der erfindungsgemäßen, in Mineralöllösungen selbstgelierenden Harze werden diese jeweils bei 180 °C in standardisiertem Mineralöl (Siedebereich 240 bis 270 °C, Anilinpunkt 72 °C) zu 40 gew.-%igen klaren Harzlösungen gelöst, die Lösungen auf 23 °C abgekühlt und sogleich unter Rühren bis zum Auftreten einer Trübung (Trübungspunkt) mit dem gleichen Mineralöl titriert. Das am Trübungspunkt in der Lösung vorliegende Verhältnis von 1 Gew.-teil Harz zu X Gew.-teilen Mineralöl wird als Verträglichkeit bzw. Klarlöslichkeitsendpunkt bezeichnet.

Weiterer Gegenstand der Erfindung sind daher öllösliche, phenolharzmodifizierte Naturharzsäureester, die selbstgelierende Mineralöllösungen bilden können und nach dem vorstehend beschriebenen erfindungsgemäßen Verfahren erhalten wurden, dadurch gekennzeichnet, daß ihre bei 180 °C in standardisiertem Mineralöl (Siedebereich 240 bis 270 °C, Anilinpunkt 72 °C) hergestellten klaren Lösungen nach Abkühlung auf 23 °C im Verhältnisbereich von vorzugsweise 1 Gew.-teil Harz zu 3 bis 10 Gew.-teilen Mineralöl keine Trübungen oder Entmischungen zeigen.

Bei Verwendung anderer Mineralöle anstelle des hier verwendeten standardisierten Prüföls (= Mineralöl PKW F 4/7 der Fa. Haltermann, Siedebereich 240 bis 270 °C, Anilinpunkt 72 °C) können sich die bei der Viskoelastizitätsmessung und bei der Mineralölverträglichkeit gefundenen Zahlenwerte ändern.

Das Molekulargewicht der erfindungsgemäßen und in Mineralöllösungen selbstgelierenden Harze kann durch Gelpermeationschromatographie der Harzlösungen in Tetrahydrofuran (THF) an Polystyrolschaum in einem Permeationsmeßgerät nach bekannten Methoden ermittelt werden. Das Molekulargewicht (Gewichtsmittel M_{w}) der erfindungsgemäßen Harze liegt gemäß den erhaltenen Meßergebnissen vorzugsweise bei Werten von M_{w} >10000 und ist nach oben nicht kritisch begrenzt. Besonders bevorzugt liegen die Molekulargewichte M_{w} jedoch in einem mittleren Bereich zwischen 10000 und 200000, insbesondere 20000 bis 100000.

Weiterer Gegenstand der Erfindung ist die Verwendung der erfindungsgemäßen und in Mineralöllösungen selbstgelierenden Harze als Bindemittelharze, vorzugsweise in Druckfarben für den Offsetdruck und den Buchdruck, wo sie insbesondere in Gelform als Gelfirnisse sehr vorteilhaft einsetzbar sind. Die Herstellung der Gelfirnisse erfolgt vorzugsweise mit hochsiedendem Mineralöl. Die Gelfirnisse werden gegebenenfalls mit weiteren Bindemittelharzen, wie z. B. phenolharzmodifizierten Kolophoniumharzen, vegetabilischen Ölen, Wachsen, Füllstoffen, Sikkativen und weiteren Zusatzstoffen vermischt und durch Pigmentierung die für den Offsetdruck und Buchdruck verwendbaren Druckfarben erhalten, die sich u.a. bei den in Druckmaschinen auftretenden Arbeitstemperaturschwankungen in einem sehr breiten Bereich weitgehend unempfindlich in ihrem Viskositätsverhalten zeigen und auch nicht unlöslich werden, was außerordentlich vorteilhaft ist.

Die Erfindung wird durch die nachfolgenden Beispiele näher erläutert.

### VERGLEICHSBEISPIEL 1

### Herstellung einer nicht selbstgelierenden Bindemittelharzlösung (Firnis) in Mineralöl

In einer heizbaren Rührapparatur mit Gaseinleitungsrohr und Rückflußkühler werden unter N₂-Schutzgasatmosphäre 40 g handelsübliches phenolharzmodifiziertes Kolophoniumharz ( ^{R} Albertol KP 135, Hersteller: Fa. Hoechst AG), das einen analytisch ermittelten Gehalt an Magnesiumverbindungen von 0,06 Gew.-%, berechnet als MgO und bezogen auf das Harz, besitzt, in 60 g eines handelsüblichen Mineralöls, das einen Siedebereich von 240 bis 270 °C und einen Anilinpunkt von 72 °C aufweist (Mineralöl PKW F 4/7 der Fa. Haltermann), 30 Minuten auf 180 °C erhitzt und anschließend auf Raumtemperatur abgekühlt, wobei eine niedrigviskose und optisch blanke Harzlösung erhalten wird, die keine Gelstruktur besitzt und nicht selbstgelierend ist. Bei Verdünnung der 40 gew.-%igen Harzlösung mit weiterem Mineralöl als Verträglichkeitstest bzw. Klarlöslichkeitstest entstehen bei 23 °C ab einem Gewichtsverhältnis Harz : Mineralöl von 1 : > 3,5 Trübungen in der Lösung, die zur Beeinträchtigung ihrer Verwendbarkeit als Firnis führen und schließlich zur Unbrauchbarkeit des Firnis führen können.

### VERGLEICHSBEISPIEL 2

### Herstellung eines Gelfirnis aus einer in Mineralöl nicht selbstgelierenden Bindemittelharzlösung (Firnis)

Das Vergleichsbeispiel 1 wird wiederholt mit der Abänderung, daß man nach dem Erhitzen der Komponenten auf 180 °C die entstandene Harzlösung nur bis 80 °C abkühlt und ihr dann 0,8 g eines handelsüblichen Aluminiumchelats, und zwar ein durch Acetessigester chelatisiertes Aluminiumisobutylat (^{(R)}Additol VXL 12, Al-Gehalt ca. 10 Gew.-%, Hersteller: Fa. Hoechst AG) zusetzt, das Gemisch wieder auf 180 °C erhitzt und 1 Stunde bei dieser Temperatur hält. Nach dem Abkühlen des Gemisches auf Raumtemperatur wird ein stabiles festes Gel erhalten, das bei der Messung seiner Viskoelastizität (Messung in dem Gerät RV 20/CV 100 der Fa. Haake mit der Meßeinrichtung (Kegel) PK 20 bei 23 °C, einem Auslenkungswinkel von 10° und einem Frequenzsweep von 0,05 bis 5 Hz) einen tan δ- Wert von 1,5 ergibt.

### BEISPIEL 1

### Herstellung eines in Mineralöllösung selbstgelierenden phenolharzmodifizierten Naturharzsäureester-Bindemittelharzes

In einem heizbaren 4 1 Mehrhalskolben mit Rührer, Thermometer, Einfüllrohr und Rückflußkühler werden unter N₂-Schutzgasatmosphäre 1054 g Kolophonium (handelsübliches Kolophonium WW), das auch als Naturharz oder als Naturharzsäure bezeichnet wird, geschmolzen und der 160 °C heißen Harzschmelze 50,6 g Maleinsäureanhydrid zudosiert, wobei eine exotherme Reaktion einsetzt, nach deren Abklingen das Reaktionsgemisch noch 1 Stunde bei 160 °C gehalten wird. Anschließend werden der Mischung bei 160 °C 552 g Nonylphenol, 136 g Pentaerythrit und 10,2 g Magnesiumoxid (= 0,52 Gew.-%, bezogen auf die Gesamtmenge der Ausgangskomponenten) zugesetzt, die Temperatur auf 110 °C erniedrigt, 155,4 g Paraformaldehyd zugegeben und die Mischung 1 Stunde bei 110 °C gerührt. Danach wird die Temperatur innerhalb von 20 Minuten auf 130 °C erhöht, wobei das Einsetzen der Phenolresolbildung unter Wasserabspaltung beginnt, was an dem beginnenden Wasserrückfluß im Rückflußkühler erkennbar ist. Die Reaktionstemperatur wird weitere 2 Stunden bei 130 °C gehalten, danach der Rückflußkühler mit einem Azeotropwasserabscheider kombiniert und dem Reaktionsgemisch über das Einfüllrohr 196 g (= 10 Gew.-%, bezogen auf das Reaktionsgemisch) Benzin, das einen Siedebereich von 145 bis 200 °C aufweist, als Schleppmittel für die azeotrope Wassereliminierung zugesetzt und das bei der Kondensationsreaktion gebildete Wasser durch azeotrope Destillation aus dem Reaktionsgemisch ausgekreist und entfernt. Dabei wird die Reaktionstemperatur innerhalb von 4 Stunden kontinuierlich bis auf 250 °C erhöht und ständig solange Wasser azeotrop destilliert und ausgekreist, bis die Wasserbildung aufhört und das Reaktionsgemisch eine Säurezahl von 23 mg KOH pro g Reaktionsgemisch erreicht hat. Danach wird bei der gleichen Temperatur bzw. unter Temperaturerhöhung bis zu 280 °C das Schleppmittel destillativ aus dem Reaktionsgemisch entfernt, zuletzt während 30 Minuten unter Vakuum bei 6 kPa (60 mbar). Die Säurezahl dient als Maß für die Umsetzung bzw. Veresterung der Naturharzsäure Kolophonium sowie der umgesetzten Maleinsäureanhydrideinheiten mit dem Pentaerythrit im Verlauf der Kondensationsreaktion. Nach Beendigung der Vakuumdestillation wird das Reaktionsgemisch auf Raumtemperatur abgekühlt und es werden 1944 g festes Bindemittelharz als glasartig erstarrte Schmelze, die pulverisierbar ist und einen Schmelzpunkt von 126 °C besitzt, erhalten. In Mineralöl vom Siebereich 240 bis 270 °C gemäß der in dem Vergleichsbeispiel 1 angegebenen Spezifikation bildet das Bindemittelharz in z. B. 40 gew.-%iger Lösung nach deren Herstellung bei 180 °C und Abkühlung auf Raumtemperatur ein stabiles festes Gel, dessen tan δ = 1,4 beträgt, gemessen wie in dem Vergleichsbeispiel 2 beschrieben. Der Verträglichkeitstest bzw. Klarlöslichkeitstest durch Verdünnung der 40 gew.-%igen Harzlösung bei 23 °C mit weiterem Mineralöl, wie in dem Vergleichsbeispiel 1 beschrieben, ergibt einen Klarlöslichkeitsbereich von Bindemittelharz : Mineralöl bis zu 1 : 10 Gewichtsteilen, d. h., das erhaltene Bindemittelharz ist deutlich besser mineralöllöslich bzw. mineralölverträglich als das handelsübliche Bindemittelharz des Vergleichsbeispiels 1. Das mittlere Molekulargewicht M_{W} des Bindemittelharzes beträgt 55600, ermittelt durch Gelpermeationschromatographie an Polystyrol in Tetrahydrofuran (THF).

### VERGLEICHSBEISPIEL 3

### Herstellung eines nicht erfindungsgemäßen und in Mineralöllösung nicht selbstgelierenden Bindemittelharzes

Das Beispiel 1 wird wiederholt mit der Abänderung, daß das bei der Reaktion gebildete Kondensationswasser ohne die Mitverwendung eines Schleppmittels aus dem Reaktionsgemisch destilliert und eliminiert wird. Das resultierende Bindemittelharz besitzt folgende Eigenschaften:
Schmelzpunkt: 108 °C
Die Klarlöslichkeit von Bindemittelharz : Mineralöl bei 23 °C beträgt bis zu 1:10 Gewichtsteile.
Das Harz ist in 40 gew-%iger Mineralöllösung bei Raumtemperatur nicht selbstgelierend. Das mittlere Molekulargewicht M_{W} des Harzes beträgt 15800.

### VERGLEICHSBEISPIEL 4

### Herstellung eines nicht erfindungsgemäßen und in Mineralöllösung nicht selbstgelierenden Bindemittelharzes

Das Beispiel 1 wird wiederholt mit der Abänderung, daß anstelle von 10,2 g Magnesiumoxid die äquivalente Menge von 14,2 g Calciumoxid (= 0,72 Gew.-%, bezogen auf die Gesamtmenge der Ausgangskomponenten) eingesetzt wird. Das resultierende Bindemittelharz besitzt folgende Eigenschaften:
Schmelzpunkt: 102 °C
Die Klarlöslichkeit von Bindemittelharz : Mineralöl bei 23 °C beträgt bis zu 1:10 Gewichtsteile.
Das Harz ist in 40 gew-%iger Mineralöllösung bei Raumtemperatur nicht selbstgelierend. Das mittlere Molekulargewicht M_{W} des Harzes beträgt 21800.

### VERGLEICHSBEISPIEL 5

### Herstellung eines nicht erfindungsgemäßen und in Mineralöllösung nicht selbstgelierenden Bindemittelharzes

Das Beispiel 1 wird wiederholt mit der Abänderung, daß anstelle von 10,2 g Magnesiumoxid die äquivalente Menge von 20,6 g Zinkoxid (= 1,04 Gew.-%, bezogen auf die Gesamtmenge der Ausgangskomponenten) eingesetzt wird. Das resultierende Bindemittelharz besitzt folgende
Eigenschaften:
Schmelzpunkt: 103 °C
Die Klarlöslichkeit von Bindemittel: Mineralöl bei 23 °C beträgt bis zu 1:10 Gewichtsteile.

Das Harz ist in 40 gew-%iger Mineralöllösung bei Raumtemperatur nicht selbstgelierend. Das mittlere Molekulargewicht M_{W} des Harzes beträgt 19300.

### BEISPIEL 2

### Herstellung eines in Mineralöllösung selbstgelierenden Bindemittelharzes

Das Beispiel 1 wird verfahrensgemäß wiederholt mit der Abänderung, daß zusätzlich handelsübliches Sojaöl als Reaktant eingesetzt und anstelle von Benzin als Schleppmittel Xylol verwendet werden, wobei im einzelnen wie folgt verfahren wird:
In einem 600 l Rührautoklaven werden unter N₂-Schutzgasatmosphäre 157 kg Kolophonium (handelsübliches Kolophonium WW), das auch als Naturharz oder als Naturharzsäure bezeichnet wird, geschmolzen und der 160 °C heißen Harzschmelze 8,4 kg Maleinsäureanhydrid zudosiert. Nach dem Abklingen der exothermen Reaktion wird das Reaktionsgemisch noch 1 Stunde bei 160 °C gerührt. Danach werden bei 160 °C nacheinander 92 kg Nonylphenol, 22,1 kg Pentaerythrit, 33,3 kg Sojaöl, 1,9 kg Magnesiumoxid (= 0,56 Gew.-%, bezogen auf die Gesamtmenge der Ausgangskomponenten) und 23,3 kg Paraformaldehyd zudosiert, der Rührautoklav druckdicht verschlossen und das Reaktionsgemisch während 3 Stunden auf 160 °C erhitzt, wobei sich ein Autoklavendruck von 0,35 MPa (3,5 bar) einstellt. Danach werden bei 160 °C der Autoklav über ein überdruckventil langsam entspannt, ein Rückflußkühler mit Wasserabscheider angeschlossen, wobei sich im Rückflußkühler ein Wasserrückfluß einzustellen beginnt, und über ein Dosiertauchrohr der Harzschmelze 33,8 kg Xylol als Schleppmittel zudosiert. Anschließend wird unter ständigem azeotropen Destillieren und Auskreisen von Wasser die Temperatur des Reaktionsgemisches langsam bis auf 260 °C erhöht und das ausgekreiste Kondensationswasser fortlaufend entfernt, bis die Wasserbildung nachläßt und die Säurezahl des Reaktionsgemisches 23 mg KOH/g Harz beträgt.
Anschließend wird das Schleppmittel abdestilliert, zuletzt unter 100 mbar Vakuum und Temperatursteigerung bis 280 °C. Danach wird das Reaktionsgemisch auf Raumtemperatur abgekühlt und das Bindemittelharz als glasartig erstarrte Schmelze, die pulverisierbar ist, erhalten. Das Harz besitzt folgende Eigenschaften:
Schmelzpunkt: 118 °C
Die Klarlöslichkeit von Bindemittelharz: Mineralöl bei 23 °C beträgt bis zu 1:10 Gewichtsteile.
Das Bindemittelharz ist in z.B. 40 gew-%iger Mineralöllösung selbstgelierend und bildet nach Herstellung der Lösung bei 180 °C und Abkühlung auf Raumtemperatur ein stabiles festes Gel, dessen tan δ = 1,4 beträgt, gemessen wie in dem Vergleichsbeispiel 2 beschrieben. Das mittlere Molekulargewicht M_{W} des Harzes beträgt 84330, ermittelt wie in Beispiel 1 beschrieben.

### BEISPIEL 3

### Herstellung eines in Mineralöllösung selbstgelierenden Bindemittelharzes

Das Beispiel 1 wird verfahrensgemäß wiederholt mit der Abänderung, daß zusätzlich handelsübliches Sojaöl sowie ein handelsübliches Cyclopentadienharz als Reaktanten eingesetzt werden, wobei im einzelnen wie folgt verfahren wird:
In einem heizbaren 4 l Mehrhalskolben mit Rührer, Thermometer, Einfüllrohr und Rückflußkühler werden unter N₂-Schutzgasatmosphäre 948,6 g Kolophonium (handelsübliches Kolophonium WW) und 105,4 g Cyclopentadienharz (Escorez 8190, Hersteller: Fa. Exxon) geschmolzen und der 160 °C heißen Harzschmelze 55,7 kg Maleinsäureanhydrid zudosiert, wobei eine exotherme Reaktion einsetzt, nach deren Abklingen das Reaktionsgemisch noch 1 Stunde bei 160 °C gehalten wird. Anschließend werden der Mischung bei 160 °C 552 g Nonylphenol, 139,5 g Pentaerythrit, 10,2 g Magnesiumoxid (= 0,48 Gew.-%, bezogen auf die Gesamtmenge der Ausgangskomponenten) und 180 g Sojaöl zugesetzt, die Temperatur auf 110 °C erniedrigt, 155,4 g Paraformaldehyd zugegeben und die Mischung 1 Stunde bei 110 °C gerührt. Danach wird die Temperatur innerhalb von 20 Minuten auf 130 °C erhöht, wobei das Einsetzen der Phenolresolbildung unter Wasserabspaltung beginnt, was an dem beginnenden Wasserrückflup im Rückflußkühler erkennbar ist. Danach erfolgt die Umsetzung bis zur Gewinnung des Endproduktes in gleicher Weise wie in Beispiel 1 beschrieben. Das in praktisch quantitativer Ausbeute erhaltene Bindemittelharz hat einen Schmelzpunkt von 106 °C und zeigt eine Säurezahl von 23 mg KOH/g Harz.

Zur Erniedrigung seiner Schmelzviskosität wird das Harz nach Beendigung der Schleppmitteldestillation bei 250 °C mit 107 g (= 5 Gew.-%, bezogen auf das Harz) eines hochsiedenden Mineralöls, dessen Siedebereich bei 260 bis 290 °C liegt, vermischt und die Mischung 30 Minuten bei 250 °C gerührt und danach auf Raumtemperatur abgekühlt.

Die Klarlöslichkeit von Bindemittelharz: Mineralöl bei 23 °C beträgt bis zu 1:5 Gewichtsteile.
Das mit 5 Gew.-% hochsiedendem Mineralöl vermischte Bindemittelharz ist in z.B. 40 gew-%iger Mineralöllösung vom Siedebereich 240 bis 270 °C selbstgelierend und bildet nach Herstellung der Lösung bei 180 °C und Abkühlung auf Raumtemperatur ein stabiles festes Gel, dessen tan δ = 1,0 beträgt, gemessen wie in dem Vergleichsbeispiel 2 beschrieben. Das mittlere Molekulargewicht M_{W} des Harzes beträgt 105740, ermittelt wie in Beispiel 1 beschrieben.

### BEISPIEL 4

### Herstellung eines in Mineralöllösung selbstgelierenden Bindemittelharzes

Das Beispiel 1 wird verfahrensgemäß wiederholt mit der Abänderung, daß zusätzlich ein handelsübliches Cyclopentadienharz als Reaktant eingesetzt wird und die Reaktionstemperatur während der Kondensations- und Veresterungsphase statt auf 250 °C nun auf 270 °C erhöht wird. Im einzelnen werden folgende Reaktantenmengen eingesetzt:

| | |
|---|---|
| 949 g | Kolophonium (handelsübliches Kolophonium WW) |
| 105 g | Cyclopentadienharz (Escorez 8190, Hersteller: Fa. Exxon) |
| 50,6 g | Maleinsäureanhydrid |
| 552 g | Nonylphenol |
| 133,4 g | Pentaerythrit |
| 12 g | Magnesiumoxid (= 0,61 Gew.-%, bezogen auf die Gesamtmenge der Ausgangskomponenten) |
| 155,4 g | Paraformaldehyd |
| 196 g | Benzin vom Siedebereich 145 bis 200 °C. |

Das mit einer Ausbeute von 93 % der Theorie resultierende Bindemittelharz hat einen Schmelzpunkt von 142 °C und zeigt eine Säurezahl von 23 mg KOH/g Harz.
Die Klarlöslichkeit von Bindemittelharz: Mineralöl bei 23 °C beträgt bis zu 1:6 Gewichtsteile.
Das Bindemittelharz ist in z.B. 40 gew-%iger Mineralöllösung vom Siedebereich 240 bis 270 °C selbstgelierend und bildet nach Herstellung der Lösung bei 180 °C und Abkühlung auf Raumtemperatur ein stabiles festes Gel, dessen tan δ = 1,6 beträgt, gemessen wie in dem Vergleichsbeipiel 2 beschrieben. Das mittlere Molekulargewicht M_{W} des Harzes beträgt 95670, ermittelt wie in Beispiel 1 beschrieben.

### BEISPIEL 5

### Verwendung eines in Mineralöllösung selbstgelierenden Bindemittelharzes zur Herstellung einer Offsetdruckfarbe

In einem heizbaren Rührgefäß werden unter N₂-Schutzgasatmosphäre 36,6 g des in Beispiel 1 hergestellten Bindemittelharzes in 63,7 g Mineralöl, dessen Siedebereich bei 260 bis 290 °C liegt, bei 180 °C gelöst, die Lösung 30 Minuten bei 180 °C gerührt und anschließend auf Raumtemperatur abgekühlt, wobei sich sogleich ein stabiles festes Gel (= Gelfirnis) bildet. 17,2 g dieses Gelfirnisses, 15,8 g Permanentrubin, 53,5 g Mineralöl mit dem Siedebereich 260 bis 290 °C und 13 g eines handelsüblichen niedrigviskosen phenolharzmodifizierten Kolophoniumharzes (Albertol VKP 1385, Hersteller: Fa. Hoechst AG) als zusätzliches Bindemittelharz werden auf einem Dreiwalzenstuhl dispergiert. Die dabei in Pastenform resultierende Offsetdruckfarbe zeigt sowohl beim Offsetdruck als auch beim Buchdruck ein sehr gutes Druckverhalten. Sie besitzt eine niedere Zügigkeit, d. h. ein sehr gutes Farbübertragungsvermögen, was zu einer sehr guten Druckschärfe führt. Es zeigt sich ferner, daß das erfindungsgemäße Gelfirnis eine überraschend gute Gelkonsistenz besitzt und diese Gelkonsistenz gegen Temperaturschwankungen innerhalb des üblichen Temperaturschwankungsbereichs von Druckereimaschinen weitgehend unempfindlich ist.

### VERGLEICHSBEISPIEL 6

### Herstellung einer Offsetdruckfarbe unter Verwendung eines in Mineralöllösung nicht selbstgelierenden Bindemittelharzes

Das Beispiel 5 wird wiederholt mit der Abänderung, daß anstelle von 17,2 g Gelfirnis aus dem Bindemittelharz des Beispiels 1 nun 17,2 g eines konventionellen, nicht erfindungsgemäßen Gelfirnisses des Vergleichsbeispiels 2 aus nicht selbstgelierendem Bindemittelharz eingesetzt werden und im übrigen wie in Beispiel 5 beschrieben verfahren wird.
Die Zügigkeit der Offsetdruckfarbe entspricht im unteren bis mittleren Druckmaschinentemperaturbereich vergleichsweise annähernd dem Beispiel 5 und auch die Druckqualitäten sind zufriedenstellend. Nachteilig ist jedoch die erhebliche Temperaturempfindlichkeit der Gelfirniskonsistenz, da bei Temperaturerhöhung innerhalb des üblichen Druckmaschinentemperaturbereichs von dem unteren oder mittleren in den oberen Temperaturbereich die Gelkonsistenz unkontrollierbar abfallen und zu minderen Druckqualitäten und Schäden führen kann, im Gegensatz zu der erfindungsgemäß über einen breiten Temperaturbereich weitgehend temperaturstabilen Gelfirniskonsistenz in Beispiel 5.

## Patentansprüche

1. Verfahren zur Herstellung von öllöslichen, phenolharzmodifizierten Naturharzsäureestern, die selbstgelierende Mineralöllösungen bilden können, aus Komponenten der Substanzgruppen
A) Naturharze oder Naturharzsäuren
B) einkernige oder mehrkernige alkylolisierbare Phenole,
C) Aldehyde oder Aldehydacetale,
D) polyfunktionelle aliphatische, cycloaliphatische oder aromatisch-aliphatische Alkohole, und
E) Magnesiumverbindungen
durch Umsetzung der Komponenten in Lösung oder in Substanz bei Temperaturen im Bereich von 80 bis 300 °C, wobei entweder die gesamte Mischung aus allen eingesetzten Komponenten zur Reaktion gebracht oder einzelne Komponenten vorgelegt und die übrigen durch Zudosieren zur Umsetzung gebracht werden, dadurch gekennzeichnet, daß man
1) Naturharze oder Naturharzsäuren aus der Substanzgruppe A) bei einer Temperatur zwischen 90 und 250 °C vorlegt,
2) mit einer Magnesiumverbindung aus der Substanzgruppe E) vermischt und der schmelzflüssigen Mischung bei einer Temperatur zwischen 100 und 250 °C die phenolische Komponente aus der Substanzgruppe B) zusetzt, dann die Aldehydkomponente aus der Substanzgruppe C) bei einer Temperatur zwischen 100 und 250 °C einträgt und unter Resolbildung umsetzt, vorzugsweise unter einem Druck zwischen 0,1 und 1 MPa (1 und 10 bar), anschließend dem Umsetzungsprodukt
3) die Polyolkomponente aus der Substanzgruppe D) bei einer Temperatur zwischen 190 und 280 °C beimischt, dem Reaktionsgemisch
4) ein als Schleppmittel zur azeotropen Destillation von Wasser bei der Umsetzungstemperatur befähigtes inertes organisches Lösungsmittel zusetzt, bei Temperaturen zwischen 200 und 280 °C das entstehende Reaktionswasser kontinuierlich azeotrop destilliert und über einen Wasserabscheider aus dem Reaktionsgemisch entfernt, wobei man die azeotrope Destillation solange fortsetzt, bis die Bildung von Reaktionswasser beendet ist und das entstandene Harz eine Säurezahl von unterhalb 50 mg/g aufweist, anschließend das Schleppmittel durch Destillation zunächst bei Normaldruck und am Ende unter Vakuum bei Drücken zwischen 0,1 MPa und 10 Pa (1000 und 0,1 mbar) und Temperaturen bis zu 300 °C entfernt und
5) gegebenenfalls in der vom Schleppmittel befreiten Harzschmelze vor deren Abkühlung eine kleinere Menge eines hochsiedenden Mineralöls löst, die Lösung auf Raumtemperatur abkühlt und das Harz in fester, mineralölhaltiger Gelform gewinnt.

2. Verfahren nach Anspruch 1, dadurch gekennzeichnet, daß die Naturharze und Naturharzsäuren der Substanzgruppe A) mit α,β-olefinisch ungesättigten Carbonsäuren oder deren Anhydriden gemischt oder umgesetzt werden.

3. Verfahren nach Anspruch 1, dadurch gekennzeichnet, daß die Phenole der Substanzgruppe B) gegenüber Oxoverbindungen mehrfunktionell sind.

4. Verfahren nach Anspruch 1, dadurch gekennzeichnet, daß die Aldehyde oder Aldehydacetale der Substanzgruppe C) aliphatische Aldehyde mit 1 bis 7 Kohlenstoffatomen sind.

5. Verfahren nach Anspruch 1, dadurch gekennzeichnet, daß die Komponente B) und C) als separat hergestellte Kondensationsprodukte in der Form von Phenolresolen eingesetzt oder mitverwendet werden.

6. Verfahren nach Anspruch 1, dadurch gekennzeichnet, daß sie zusätzlich Verbindungen der Substanzgruppe F) Fettsäuren oder Fettsäureverbindungen enthalten.

7. Verfahren nach Anspruch 1, dadurch gekennzeichnet, daß sie zusätzlich Verbindungen der Substanzgruppe G) olefinisch ungesättigte Kohlenwasserstoffharze enthalten.

8. Verfahren nach Anspruch 1, dadurch gekennzeichnet, daß die Umsetzung unter einer inerten Schutzgasatmosphäre durchgeführt wird.

9. Verfahren nach Anspruch 1, dadurch gekennzeichnet, daß im Schritt 2 zunächst die Komponente B) zugesetzt wird, dann die Aldehydkomponenten aus der Substanzgruppe C) eingetragen wird, und B) und C) unter Resolbildung umgesetzt werden.

10. Verfahren nach Anspruch 1, dadurch gekennzeichnet, daß in der Umsetzung gemäß den Stufen 1) bis 5) jeweils auf die Gesamtmasse bezogenen Massenanteile der Komponenten
A) von 20 bis 80 %,
B) von 10 bis 45 %,
C) von 2 bis 20 %,
D) von 1 bis 20 %,
E) von 0,01 bis 2 % eingesetzt werden,
sowie die Massenanteile von inertem Schleppmittel 1 bis 20 % und an hochsiedendem Mineralöl mit einem Siedebereich von 240 bis 270 °C 0 bis 15 % betragen.

11. Verfahren nach Anspruch 1, dadurch gekennzeichnet, daß als Verbindungen der Substanzgruppen C) aliphatische (C₁-C₇)-Aldehyde eingesetzt werden, wobei das Molverhältnis der Phenolkomponente aus B) zur Aldehydkomponente für die Phenolresolbildung 1 : 0,9 bis 1 : 3,5 beträgt.

12. Verfahren nach Anspruch 1, dadurch gekennzeichnet, daß als Verbindungen der Substanzgruppen E) Magnesiumoxid, Magnesiumhydroxid, Magnesiumcarbonat, Magnesiumbicarbonat, Magnesiumacetat, Magnesiumformiat oder Magnesiumoxalat eingesetzt werden.

13. Selbstgelierende, öllösliche, phenolharzmodifizierte Naturharzsäureester, erhältlich nach einem Verfahren gemäß Anspruch 1.

14. Selbstgelierende, öllösliche, phenolharzmodifizierte Naturharzsäureester nach Anspruch 13, dadurch gekennzeichnet, daß ihre Lösungen mit einem Massenanteil des Harzes von 40 % in standardisiertem Mineralöl (Siedebereich 240 bis 270 °C, Anilinpunkt 72 °C) viskoelastische Gele bilden, die bei Messungen im oszillierenden Rotationsviskosimeter bei 23 °C im Winkelgeschwindigkeitsbereich = 1 bis 10 s⁻¹ tan δ-Werte von unter 5 ergeben.

15. Selbstgelierende, öllösliche, phenolharzmodifizierte Naturharzsäureester nach Anspruch 13, dadurch gekennzeichnet, daß ihre bei 180 °C in standardisiertem Mineralöl (Siedebereich 240 bis 270 °C, Anilinpunkt 72 °C) hergestellten klaren Lösungen nach Abkühlung auf 23 °C im Verhältnisbereich von 1 Gewichtsteil Harz zu 3 bis 10 Gewichtsteilen Mineralöl keine Trübungen oder Entmischungen zeigen.

16. Selbstgelierende, öllösliche, phenolharzmodifizierte Naturharzsäureester nach Anspruch 13, dadurch gekennzeichnet, daß ihre gewichtsmittlere molare Masse (M_{w}) im Bereich zwischen 10000 und 200000 g/mol liegt.

17. Verwendung der selbstgelierenden, öllöslichen, phenolharzmodifizierten Naturharzsäureester nach Anspruch 13 als Bindemittelharze in Druckfarben für den Offsetdruck und den Buchdruck.

## Claims

1. A process for the preparation of an oil-soluble, phenolic resin-modified natural resinic acid ester which is able to form self-gelling mineral oil solutions and comprises components from the substance groups consisting of
A) natural resins or natural resinic acids,
B) mononuclear or polynuclear alkylolizable phenols,
C) aldehydes or aldehyde acetals,
D) polyfunctional aliphatic, cycloaliphatic or aromatic-aliphatic alcohols, and
E) magnesium compounds,
by reaction of the components in solution or in bulk at temperatures in the range from 80 to 300°C, either the entire mixture of all components used being reacted or individual components being initially introduced and the others being reacted by metering in, wherein
1) natural resins or natural resinic acids from substance group A) are initially introduced at a temperature of between 90 and 250°C,
2) they are mixed with a magnesium compound from substance group E) and the phenolic component from substance group B) is added to the liquid-melt mixture at a temperature of between 100 and 250°C, the aldehyde component from substance group C) is then introduced at a temperature of between 100 and 250°C and reacted with resol formation, preferably under a pressure of between 0.1 and 1 MPa, (1 and 10 bar),
3) the polyol component from substance group D) is then admixed to the reaction product at a temperature of between 190 and 280°C,
4) an inert organic solvent capable of acting as entraining agent for the azeotropic distillation of water at the reaction temperature is added to the reaction mixture, at temperatures of between 200 and 280°C the water of reaction formed is distilled continuously as an azeotrope and removed from the reaction mixture via a water separator, the azeotropic distillation being continued until the formation of water of reaction has ended and the resin formed has an acid number of below 50 mg/g, the entraining agent is then removed by distillation, initially under normal pressure and at the end under vacuum at pressures of between 0.1 MPa and 10 Pa (1000 and 0.1 mbar) and temperatures of up to 300°C, and
5) optionally, a relatively small amount of a high-boiling mineral oil is dissolved in the resin melt freed from entraining agent, before said melt has cooled, the solution is cooled to room temperature and the resin is obtained in solid, mineral oil-containing gel form.

2. The process as claimed in claim 1, wherein the natural resins and natural resinic acids of substance group A) are mixed or reacted with α,β-olefinically unsaturated carboxylic acids or their anhydrides.

3. The process as claimed in claim 1, wherein the phenols of substance group B) are polyfunctional with respect to oxo compounds.

4. The process as claimed in claim 1, wherein the aldehydes or aldehyde acetals of substance group C) are aliphatic aldehydes having 1 to 7 carbon atoms.

5. The process as claimed in claim 1, wherein components B) and C) are used or co-used as separately prepared condensation products in the form of phenol resols.

6. The process as claimed in claim 1, wherein additionally compounds of substance group F) fatty acids or fatty acid compounds are used.

7. The process as claimed in claim 1, wherein additionally compounds of substance group G) olefinically unsaturated hydrocarbon resins are used.

8. The process as claimed in claim 1, wherein the reaction is carried out under an inert blanketing gas atmosphere.

9. The process as claimed in claim 1, wherein, in step 2, component B) is initially added, the aldehyde component from substance group C) is then introduced, and B) and C) are reacted with resol formation.

10. The process as claimed in claim 1, wherein, in the reaction according to stages 1) to 5), proportions by mass, in each case based on the total mass, of components
A) of 20 to 80%,
B) of 10 to 45%,
C) of 2 to 20%,
D) of 1 to 20%,
E) of 0.01 to 2% are used,
and the proportion by mass of inert entraining agent is 1 to 20% and the proportion by mass of high-boiling mineral oil having a boiling range from 240 to 270°C is 0 to 15%.

11. The process as claimed in claim 1, wherein the compounds of substance group C) used are aliphatic (C₁-C₇)-aldehydes, the molar ratio of the phenol component from B) to the aldehyde component for the formation of the phenol resol being 1:0.9 to 1:3.5.

12. The process as claimed in claim 1, wherein the compounds of substance group E) used are magnesium oxide, magnesium hydroxide, magnesium carbonate, magnesium bicarbonate, magnesium acetate, magnesium formate or magnesium oxalate.

13. A self-gelling, oil-soluble, phenolic resin-modified natural resinic acid ester, obtainable by a process as claimed in claim 1.

14. A self-gelling, oil-soluble, phenolic resin-modified natural resinic acid ester as claimed in claim 13, wherein its solutions having a proportion by mass of the resin of 40% in standardized mineral oil (boiling range 240 to 270°C, aniline point 72°C) form viscoelastic gels which on measurement in an oscillating rotary viscometer at 23°C in the angular velocity range of ω = 1 to 10 s⁻¹ give tan 6 values of below 5.

15. A self-gelling, oil-soluble, phenolic resin-modified natural resinic acid ester as claimed in claim 13, wherein its clear solutions prepared at 180°C in standardized mineral oil (boiling range 240 to 270°C, aniline point 72°C) show no turbidity or demixing after cooling to 23°C in the ratio range of 1 part by weight of resin to 3 to 10 parts by weight of mineral oil.

16. A self-gelling, oil-soluble, phenolic resin-modified natural resinic acid ester as claimed in claim 13, wherein its weight-average molar mass (M_{w}) is in the range between 10,000 and 200,000 g/mol.

17. The use of the self-gelling, oil-soluble, phenolic resin-modified natural resinic acid esters as claimed in claim 13 as binder resins in printing inks for offset printing and letterpress printing.

## Revendications

1. Procédé de préparation d'esters d'acides résiniques naturels modifiés par une résine phénolique, solubles dans l'huile, pouvant former des solutions dans des huiles mierales auto-gélifiants, à partir de composants pris dans les groupes de substances de
A) résines naturelles ou acides résiniques naturels,
B) phénols alkylolisables monocycliques ou polycycliques,
C) aldéhydes ou aldéhydacétals,
D) alcools polyfonctionnels aliphatiques, cycloaliphatiques ou aromatico-aliphatiques
et
E) composés de magnésium
par réaction des composants en solution ou en masse, à une température dans l'intervalle de 80 à 300°C, soit en faisant réagir la totalité du mélange de tous les composants utilisés, soit en prenant les composants individuellement et en ajoutant progressivement les autres, caractérisé en ce que
1) on prend les résines naturelles ou les acides résiniques naturels dans le groupe de substances A), à une température comprise entre 90 et 250°C,
2) on mélange avec un composé de magnésium pris dans le groupe des substances E) et on ajoute au mélange liquide en fusion, à une température comprise entre 100 et 250°C, le composant phénol pris dans le groupe de substances B), puis on introduit le composant aldéhyde pris dans le groupe de substances C), à une température comprise entre 100 et 250°C, et on fait réagir en formant un résol, de préférence à une pression comprise entre 0,1 et 1 MPa (1 et 10 bar ), ensuite on ajoute par mélange au produit de réaction
3) le composant polyol pris dans le groupe de substances D), à une température comprise entre 190 et 280°C, on ajoute au mélange réactionnel
4) un solvant organique inerte capable de servir d'agent d'entraînement pour la distillation azéotropique de l'eau à la température réactionnelle, on élimine du mélange réactionnel, par distillation azéotropique en continu à une température comprise entre 200 et 280 °C, l'eau réactionnelle formée jusqu'à ce que la formation de l'eau réactionnelle soit terminée et que la résine obtenue présente un indice d'acide inférieur à 50 mg/g, ensuite, on élimine l'agent d'entraînement par distillation, d'abord à la pression normale, puis sous vide à une pression comprise entre 0,1 MPa et 10 Pa (1000 et 0,1 mbar), et à une température allant jusqu'à 300 °C et
5) éventuellement, on dissout dans la résine fondue, débarrassée de l'agent d'entraînement, avant son refroidissement, une petite quantité d'huile minérale à haut point d'ébullition, on refroidit la solution à la température ambiante et on obtient la résine sous forme solide gélifiée, comportant l'huile minérale.

2. Procédé selon la revendication 1, caractérisé en ce que l'on mélange ou on fait réagir les résines naturelles et les acides résiniques naturels pris dans le groupe de substances A) avec des acides carboxyliques à insaturation oléfinique en α,β ou leurs anhydrides.

3. Procédé selon la revendication 1, caractérisé en ce que les phénols du groupe de substances B) sont multifonctionnels vis-à-vis des composés oxo.

4. Procédé selon la revendication 1, caractérisé en ce que les aldéhydes ou les aldéhydacétals du groupe de substances C) sont des aldéhydes aliphatiques comportant 1 à 7 atomes de carbone.

5. Procédé selon la revendication 1, caractérisé en ce que l'on utilise les composants B) et C) comme produits de condensation préparés séparément sous la forme de phénol-résols ou on les utilise conjointement.

6. Procédé selon la revendication 1, caractérisé en ce qu'il comporte de plus des composés du groupe de substances F) des acides gras ou des composés d'acides gras.

7. Procédé selon la revendication 1, caractérisé en ce qu'il comporte de plus des composés du groupe de substances G) des hydrocarbures à insaturation oléfinqiue.

8. Procédé selon la revendication 1, caractérisé en ce que l'on met en oeuvre la réaction sous une atmosphère protectrice de gaz inerte.

9. Procédé selon la revendication 1, caractérisé en ce que dans l'étape 2, on ajoute d'abord le composant B), puis on introduit le composant aldéhyde du groupe de substances C) et on fait réagir les B) et C) en formant des résols.

10. Procédé selon la revendication 1, caractérisé en ce que l'on utilise dans la réaction selon les étapes 1) à 5) chaque fois par rapport à la totalité du poids, des parties en poids des composants
A) de 20 à 80 %,
B) de 10 à 45 %,
C) de 2 à 20 %,
D) de 1 à 20 %,
E) de 0,01 à 2 %,
ainsi que les parties en poids d'agent d'entraînement inerte sont de 1 à 20 %, et les parties en poids d'huile minérale à haut point d'ébullition, dans l'intervalle d'ébullition de 240 à 270 °C, sont de 0 à 15 %.

11. Procédé selon la revendication 1, caractérisé en ce que l'on utilise comme composés du groupe de substances C) des aldéhydes en C₁-C₇ aliphatiques, le rapport molaire du composant phénol de B) au composant aldéhyde pour la formation du résol étant de 1:0,9 à 1:3,5.

12. Procédé selon la revendication 1, caractérisé en ce que l'on utilise comme composés du groupe de substances E), l'oxyde de magnésium, l'hydroxyde de magnésium, le carbonate de magnésium, l'acétate de magnésium, le formiate de magnésium ou l'oxalate de magnésium.

13. Esters d'acides résiniques naturels modifiés par une résine phénolique, solubles dans l'huile, auto-gélifiants, que l'on peut obtenir selon un procédé selon la revendication 1.

14. Esters d'acides résiniques naturels modifiés par une résine phénolique, solubles dans l'huile, auto-gélifiants, selon la revendication 13, caractérisés en ce que leurs solutions dans une huile minérale standardisée (intervalle d'ébullition de 240 à 270 °C, point d'aniline 70 °C), ayant une teneur en poids de 40 % en résine, forment des gels viscoélastiques, qui donnent des valeurs mesurées dans un viscosimètre rotative oscillant, à 23 °C, dans l'intervalle de vitesses angulaires = 1 à 10 s⁻¹ de tan δ inférieures à 5.

15. Esters d'acides résiniques naturels modifiés par une résine phénolique, solubles dans l'huile, auto-gélifiants, selon la revendication 13, caractérisés en ce que leurs solutions limpides préparées dans l'huile minérale standardisée (intervalle d'ébullition de 240 à 270 °C, point d'aniline 72 °C), ne présentent pas de trouble ni de ségrégation de phases après refroidissement à 23 °C dans le domaine de rapports de 1 partie en poids de résine à 3 à 10 parties en poids d'huile minérale.

16. Esters d'acides résiniques naturelles modifiés par une résine phénolique, solubles dans l'huile, auto-gélifiants, selon la revendication 13, caractérisés en ce que leur masse molaire moyenne en poids (Mw) est comprise entre 1000 et 200000 g/mol.

17. Utilisation d'esters d'acides résiniques naturels, modifiés par une résine phénolique, solubles dans l'huile, auto-gélifiants, selon la revendication 13, comme liants résineux dans les encres d'imprimerie pour l'impression offset et l'impression de livres.
